# EUROPEAN PATENT APPLICATION

(11) **EP 4 734 461 A1**
(43) Date of publication of application: **29.04.2026**
(21) Application number: 25204294.0
(22) Date of filing: 24.09.2025
(51) Int. Cl.: H04L 27/26

(54) **METHOD AND APPARATUS OF APPLYING DIFFERENT PHASE ROTATIONS TO DIFFERENT ORTHOGONAL FREQUENCY DIVISION MULTIPLEXING SUBCARRIER TONES WITHIN SAME DUPLICATED FREQUENCY-DOMAIN SEGMENT**

(30) Priority: 24.10.2024 US 202463711167 P; 26.06.2025 US 202519251744
(71) Applicant: MEDIATEK INC., Hsinchu City 30078 (TW)
(72) Inventor: CHIU, Wen-Hsien, 30078 Hsinchu City (TW)
(74) Representative: Hoefer & Partner Patentanwälte mbB

(57) **Abstract**

A wireless communication method includes: generating a plurality of duplicated frequency-domain segments (211_1 - 211_N), wherein each of the plurality of duplicated frequency-domain segments (211_1 - 211_N) includes a plurality of orthogonal frequency division multiplexing (OFDM) subcarrier tones; performing a phase rotation operation upon the plurality of duplicated frequency-domain segments (211_1 - 211 _N), including applying different phase rotations to different OFDM subcarrier tones within a same duplicated frequency-domain segment; and generating an OFDM signal according to an output of the phase rotation operation.

## Description

### Field of the Invention

This invention relates to a wireless communications method and apparatus capable of applying different phase rotations to different orthogonal frequency division multiplexing (OFDM) subcarrier tones within a same duplicated frequency-domain segment for reducing a peak-to-average power ratio (PAPR).

### Background of the Invention

Wireless local area network (WLAN) technology is one of popular wireless communication technologies in the world. For example, WLAN technology is widely implemented in consumer electronics, including desktop computers, laptop computers, smart phones, etc., to facilitate convenient and high-speed wireless communication. IEEE 802.11 standard is a set of WLAN protocols established by the Institute of Electrical and Electronics Engineers (IEEE). With the development of IEEE 802.11 standard, OFDM has become a fundamental technology in Wi-Fi systems. OFDM has advantages of high spectrum utility efficiency and capability of resisting signal attenuation caused by a multi-path propagation. However, one of the significant drawbacks of OFDM is the high PAPR, which can lead to inefficiencies in power amplifiers and increased distortion. One typical PAPR reduction solution is a clipping method that often introduces signal quality degradation. Thus, there is a need for an innovative PAPR reduction scheme aimed at effectively reducing the PAPR without suffering signal quality degradation.

### Summary of the Invention

The invention aims at providing a method and apparatus of applying different phase rotations to different OFDM subcarrier tones within a same duplicated frequency-domain segment for reducing a PAPR, according to claims 1 and 6, respectively. The dependent claims pertain to corresponding further developments and improvements.

As will be seen more clearly from the detailed description below, the exemplary wireless communication method further comprises: generating a plurality of duplicated frequency-domain segments, wherein each of the plurality of duplicated frequency-domain segments comprises a plurality of OFDM subcarrier tones; performing a phase rotation operation upon the plurality of duplicated frequency-domain segments, comprising: applying different phase rotations to different OFDM subcarrier tones within a same duplicated frequency-domain segment; and generating an OFDM signal according to an output of the phase rotation operation.

As will be seen more clearly from the detailed description below, the exemplary wireless communication apparatus further comprises a first processing circuit, a phase rotator circuit, and a second processing circuit. The first processing circuit is configured to generate a plurality of duplicated frequency-domain segments, wherein each of the plurality of duplicated frequency-domain segments comprises a plurality of OFDM subcarrier tones. The phase rotator circuit is configured to perform a phase rotation operation upon the plurality of duplicated frequency-domain segments, comprising: applying different phase rotations to different OFDM subcarrier tones within a same duplicated frequency-domain segment. The second processing circuit is configured to generate an OFDM signal according to an output of the phase rotator circuit.

### Brief Description of the Drawings

In the following, the invention is further illustrated by way of example, taking reference to the following drawings. Thereof:
- FIG. 1: is a diagram illustrating a wireless communication apparatus that supports the proposed PAPR reduction scheme according to an embodiment of the present invention.
- FIG. 2: is a diagram illustrating an OFDM transmitter with PAPR reduction according to an embodiment of the present invention.
- FIG. 3: is a diagram illustrating a linear phase rotation applied to a duplicated frequency-domain segment according to an embodiment of the present invention.

### Detailed Description

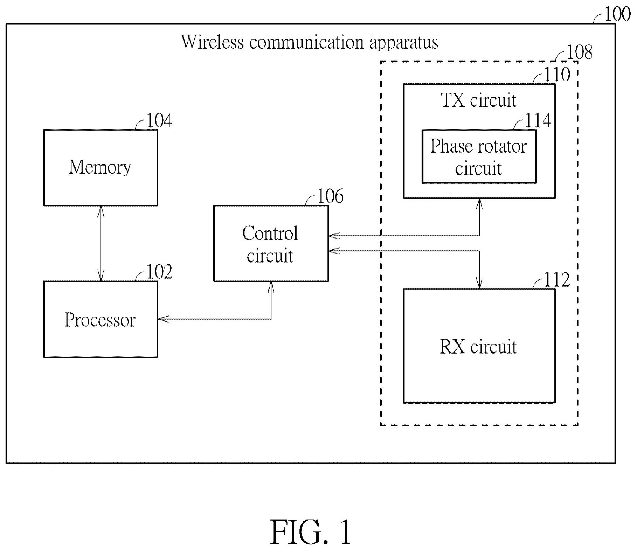

FIG. 1 is a diagram illustrating a wireless communication apparatus that supports the proposed PAPR reduction scheme according to an embodiment of the present invention. The wireless communication apparatus 100 may be a wireless local area network (WLAN) device such as a Wi-Fi device compliant with an existing Wi-Fi standard or a next-generation Wi-Fi standard, where the Wi-Fi device may be an access point (AP) or a non-AP station (STA). However, this is for illustrative purposes only, and is not meant to be a limitation of the present invention. In practice, any OFDM-based wireless communication apparatus using the proposed PAPR reduction scheme falls within the scope of the present invention.

As shown in FIG. 1, the wireless communication apparatus 100 may include a processor 102, a memory 104, a control circuit 106, and a wireless interface circuit 108, where the wireless interface circuit 108 may include a transmitter (TX) circuit 110 and a receiver (RX) circuit 112. The memory 104 is configured to store a program code. The processor 102 is configured to load and execute the program code to manage the wireless communication apparatus 100. The control circuit 106 is configured to control communications with other wireless communication apparatuses. For example, the control circuit 106 controls the TX circuit 110 of the wireless interface circuit 108 to send packets (e.g., Wi-Fi physical layer protocol data units (PPDUs)) to a peer device, and controls the RX circuit 112 of the wireless interface circuit 108 to receive packets (e.g., Wi-Fi PPDUs) from the peer device.

It should be noted that only the components pertinent to the present invention are illustrated in FIG. 1. In practice, the wireless communication apparatus 100 may include additional components to achieve designated functions.

In this embodiment, the wireless communication apparatus 100 supports the proposed PAPR reduction scheme. Specifically, the wireless interface circuit 108 (particularly, TX circuit 110 of wireless interface circuit 108) includes a phase rotator circuit 114 that is configured to apply different phase rotations to different OFDM subcarrier tones within the same duplicated frequency-domain segment, thereby introducing decorrelation between a plurality of duplicated frequency-domain segments of an OFDM packet (e.g., a Wi-Fi PPDU).

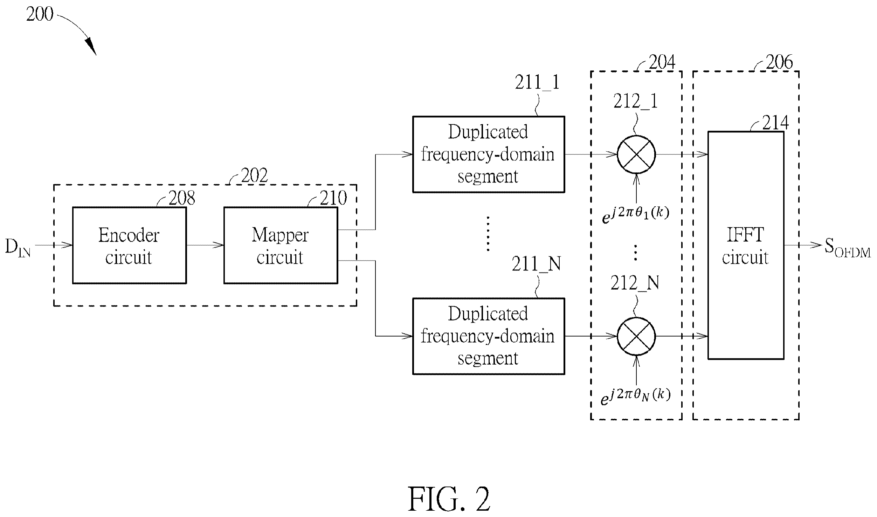

FIG. 2 is a diagram illustrating an OFDM transmitter with PAPR reduction according to an embodiment of the present invention. The OFDM transmitter 200 may include a first processing circuit 202, a phase rotator circuit 204, and a second processing circuit 206. For example, the OFDM transmitter 200 may be a part of the TX circuit 110 shown in FIG. 1, and the phase rotator circuit 114 shown in FIG. 1 may be implemented using the phase rotator circuit 204. The first processing circuit 202 is configured to generate a plurality of duplicated frequency-domain segments 211_1-211_N (N ≥ 2), where each of the duplicated frequency-domain segments 211_1-211_N includes a plurality of OFDM subcarrier tones indexed by k (1 ≤ k ≤ K & K ≥ 2). For example, the first processing circuit 202 may include an encoder circuit 208 and a mapper circuit 210, where the encoder circuit 208 may perform channel coding upon an input bitstream D_{IN}, and the mapper circuit 210 may perform modulation (e.g., phase-shift keying (PSK) or quadrature amplitude modulation (QAM)) upon an output of the encoder circuit 208 to generate a plurality of symbols. In this embodiment, the same symbols are carried by each of the duplicated frequency-domain segments 211_1-211_N in different subbands/subchannels. In some embodiments of the present invention, each of the duplicated frequency-domain segments 211_1-211_N carries information of a portion of a Wi-Fi PPDU. For example, the portion of the Wi-Fi PPDU may be preamble, including a legacy short training field (L-STF), a legacy signal field (L-SIG), a repeated L-SIG field (RL-SIG), a high throughput signal field (HT-SIG), a very high throughput signal-A field (VHT-SIG-A), a high efficiency signal-A field (HE-SIG-A), a high efficiency signal-B field (HE-SIG-B), a universal signal field (U-SIG), an extremely high-throughput signal field (EHT-SIG), and/or an ultra-high reliability signal field (UHR-SIG).

The phase rotator circuit 204 is configured to perform a phase rotation operation upon the duplicated frequency-domain segments 211_1-211_N. The second processing circuit 206 is configured to generate an OFDM signal S_{OFDM} in the time domain according to an output of the phase rotator circuit 204. For example, the second processing circuit 206 may include an inverse fast Fourier transform (IFFT) circuit 214, where the OFDM signal S_{OFDM} is derived from combining IFFT outputs of duplicated frequency-domain segments 211_1-211_N with per-subcarrier phase rotation.

In accordance with the proposed PAPR reduction scheme, the phase rotation operation performed by the phase rotator circuit 204 includes applying different phase rotations to different OFDM subcarrier tones within the same duplicated frequency-domain segment 211_n (1 ≤ n ≤ N). As shown in FIG. 2, the phase rotator circuit 204 may include a plurality of multipliers 212_1-212_N (N ≥ 2), where the multiplier 212_1 is configured to apply different phase rotations θ₁(k) across OFDM subcarrier tones (which are indexed by k) within the same duplicated frequency-domain segment 211_1, and the multiplier 212_N is configured to apply different phase rotations θ_{N}(k) across OFDM subcarrier tones (which are indexed by k) within the same duplicated frequency-domain segment 211_N. Specifically, a phase rotation θₙ(k) for a duplicated frequency-domain segment n and an OFDM subcarrier tone index k is set by θₙ(k) = s(n) * p(n) * k , where s(n) represents rotation direction in the duplicated frequency-domain segment n, and p(n) represents a phase rotation step size in the duplicated frequency-domain segment n. The rotation direction s(n) may be set by +1 or -1, depending upon actual design considerations. The phase rotation step size p(n) may be set by a random value, depending upon actual design considerations.

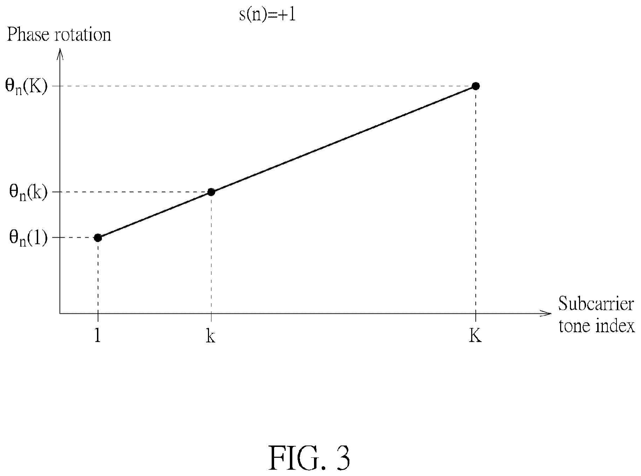

In some embodiments of the present invention, the phase rotation operation performed by the phase rotator circuit 204 may include a linear phase rotation applied to each of the duplicated frequency-domain segments 211_1-211_N. FIG. 3 is a diagram illustrating a linear phase rotation θₙ(k) applied to a duplicated frequency-domain segment 211_n (1 ≤ n ≤ N) according to an embodiment of the present invention. In this embodiment, the rotation direction s(n) is set by +1. Hence, the phase rotation θₙ(k) (i.e., θₙ(k)=s(n) * p(n) * k) increases linearly when the OFDM subcarrier tone index k increases. A person skilled in the art should readily appreciate that, if the rotation direction s(n) is set by -1, the phase rotation θₙ(k) (i.e., θₙ(k)=s(n) * p(n) * k) decreases linearly when the OFDM subcarrier tone index k increases.

Consider a case where the wireless communication apparatus 100 is a Wi-Fi device (e.g., AP) that supports a 320MHz bandwidth (BW320), and the 320MHz bandwidth may be divided into sixteen 20MHz subbands/subchannels. Hence, the first processing circuit 202 generates 16 duplicated frequency-domain segments 211_1-211_16 (N = 16) that occupy different 20MHz subbands/subchannels within the 320MHz bandwidth, respectively. The rotation direction s(1: 16) for duplicated frequency-domain segments 211_1-211_16 may be set by [+1 +1 +1 +1 -1 -1 -1 -1 -1 +1 -1 -1 +1 +1 +1 -1]. The phase rotation step size p(1:16) for duplicated frequency-domain segments 211_1-211_16 may be set by [22/128 7/128 6/128 3/128 16/128 7/128 11/128 21/128 12/128 20/128 6/128 24/128 21/128 5/128 23/128 20/128]. However, these are for illustrative purposes only, and are not meant to be limitations of the present invention. In practice, the parameters p(n) and s(n) may be set by any values that can achieve the minimum PAPR. For example, the parameters p(n) and s(n) may be pre-defined based on an experiment result or a simulation result.

Compared to the conventional time-domain clipping method for PAPR reduction, the proposed PAPR reduction scheme can achieve effective PAPR reduction without having impact on signal error vector magnitude (EVM) and signal power.

## Claims

1. A wireless communication method **characterized by**:
generating a plurality of duplicated frequency-domain segments (211_1 - 211_N), wherein each of the plurality of duplicated frequency-domain segments (211_1 - 211_N) comprises a plurality of orthogonal frequency division multiplexing (OFDM) subcarrier tones;
performing a phase rotation operation upon the plurality of duplicated frequency-domain segments (211_1 - 211_N), comprising:
applying different phase rotations to different OFDM subcarrier tones within a same duplicated frequency-domain segment; and
generating an OFDM signal according to an output of the phase rotation operation.

2. The wireless communication method of claim 1, **characterized in that** the phase rotation operation comprises a linear phase rotation applied to each of the plurality of duplicated frequency-domain segments (211_1 - 211_N).

3. The wireless communication method of claim 1, **characterized in that** each of the duplicated frequency-domain segments (211_1 - 211_N) carries information of a portion of a Wi-Fi physical layer protocol data unit (PPDU).

4. The wireless communication method of claim 3, **characterized in that** the portion of the Wi-Fi PPDU comprises preamble.

5. The wireless communication method of claim 1, **characterized in that** a phase rotation θₙ(k) for a duplicated frequency-domain segment n and an OFDM subcarrier tone index k is set by:
θ ₙ(k) = s(n) * p(n) * k , where s(n) represents rotation direction in the duplicated frequency-domain segment n, and p(n) represents a phase rotation step size in the duplicated frequency-domain segment n.

6. A wireless communication apparatus (100) **characterized by**:
a first processing circuit (202), configured to generate a plurality of duplicated frequency-domain segments (211_1 - 211_N), wherein each of the plurality of duplicated frequency-domain segments (211_1 - 211_N) comprises a plurality of orthogonal frequency division multiplexing (OFDM) subcarrier tones;
a phase rotator circuit (204), configured to perform a phase rotation operation upon the plurality of duplicated frequency-domain segments (211_1 - 211_N), comprising:
applying different phase rotations to different OFDM subcarrier tones within a same duplicated frequency-domain segment; and
a second processing circuit (206), configured to generate an OFDM signal according to an output of the phase rotator circuit (204).

7. The wireless communication apparatus (100) of claim 6, **characterized in that** the phase rotation operation comprises a linear phase rotation applied to each of the plurality of duplicated frequency-domain segments.

8. The wireless communication apparatus (100) of claim 6, **characterized in that** each of the duplicated frequency-domain segments carries information of a portion of a Wi-Fi physical layer protocol data unit (PPDU).

9. The wireless communication apparatus (100) of claim 8, **characterized in that** the portion of the Wi-Fi PPDU comprises preamble.

10. The wireless communication apparatus (100) of claim 6, **characterized in that** a phase rotation θₙ(k) for a duplicated frequency-domain segment n and an OFDM subcarrier tone index k is set by:
θ ₙ(k) = s(n) * p(n) * k , where s(n) represents rotation direction in the duplicated frequency-domain segment n, and p(n) represents a phase rotation step size in the duplicated frequency-domain segment n.
